# EUROPÄISCHE PATENTSCHRIFT

(11) **EP 4 594 653 B1**
(45) Veröffentlichungstag und Bekanntmachung des Hinweises auf die Patenterteilung: **10.06.2026**
(21) Anmeldenummer: 23776934.4
(22) Anmeldetag: 22.09.2023
(51) Int. Cl.: F16D 55/2255, F16D 65/18, F16D 65/56

(54) **SCHEIBENBREMSE FÜR EIN NUTZFAHRZEUG**
DISC BRAKE FOR A UTILITY VEHICLE
FREIN À DISQUE POUR VÉHICULE UTILITAIRE

(30) Priorität: 30.09.2022 DE 102022125261
(43) Veröffentlichungstag der Anmeldung: 06.08.2025
(73) Patentinhaber: KNORR-BREMSE Systeme für Nutzfahrzeuge GmbH, 80809 München (DE)
(72) Erfinder: SCHRÖPF, Frederic, 94469 Deggendorf (DE); MOLNAR, Markus, 94081 Fürstenzell (DE); HABERL, Stefan, 94486 Osterhofen (DE)
(86) Internationale Anmeldenummer: PCT/EP2023/076260
(87) Internationale Veröffentlichungsnummer: WO 2024/068478

(56) Entgegenhaltungen:
- EP-A1- 2 960 539
- EP-A2- 2 948 690
- WO-A2-2020/015992
- DE-A1- 102012 006 101
- DE-A1- 102012 102 577
- DE-A1- 102014 112 662
- DE-A1- 102014 113 847
- US-A- 5 927 445
- US-A1- 2016 215 841
- US-A1- 2019 331 181

## Beschreibung

Die Erfindung betrifft eine Scheibenbremse für ein Nutzfahrzeug nach dem Oberbegriff des Anspruchs 1.

Die Nachstelleinrichtung einer solchen, beispielsweise aus der DE 10 2017 125 867 B4 bekannten Scheibenbremse dient dem Ausgleich einer verschleißbedingten Änderung eines Lüftspiels, d.h., des Abstands zwischen dem zuspannseitigen Bremsbelag und einer fahrzeugseitigen Bremsscheibe.

Dabei erfolgt bei Betätigung eines Bremshebels eine axiale Verstellung mindestens einer Stellspindel, die als Bremsstempel fungiert und die in einer beim Bremsen in Richtung der Bremsscheibe verschiebbaren Brücke der Scheibenbremse verdrehbar gehalten ist.

Zur Verdrehung der Stellspindel sind am Bremshebel Mitnehmerfinger angeordnet, die in eine ein Abtriebselement bildende Schaltgabel der Stellspindel eingreifen, so dass bei einer Schwenkbewegung des Bremshebels die Schaltgabel verdreht wird.

Für den Fall, dass das Lüftspiel größer ist als vorbestimmt, erfolgt durch Verdrehung der Stellspindel eine Korrektur des Lüftspiels.

Sobald das vorbestimmte Lüftspiel eingestellt ist, erfolgt im Folgenden keine Nachstellung, wozu die Stellspindel eine Kugelrampenkupplung aufweist, wie sie beispielsweise in der DE 10 2014 113 826 B4 offenbart ist.

Die Geometrie der Mitnehmerfinger der bekannten Nachstelleinrichtung ist hauptsächlich bestimmt durch fertigungstechnische Vorgaben, insbesondere eine gute Herstellbarkeit.

Allerdings hat sich gezeigt, dass dabei der jeweilige Kontaktbereich der Mitnehmerfinger an der Flanke eines zugeordneten Zahnes der Schaltgabel verschleißintensiv ist, da sich lediglich ein Punktkontakt ergibt. Der hohe Verschleiß führt jedoch dazu, dass die vorgegebene Lüftspielgrenze nicht eingehalten werden kann, was letztendlich die Betriebssicherheit der Scheibenbremse insgesamt beeinträchtigt.

Ebenfalls eine Scheibenbremse gemäß der Gattung ist in der DE 42 04 307 A1 thematisiert. Um den Verschleiß zwischen Mitnehmerfinger und Abtriebselement zu verringern, ist darin vorgeschlagen, zwei Mitnehmerfinger mit den Zahnlücken des Abtriebselementes in Eingriff zu bringen, wobei zur weiteren Verschleißreduzierung eine Härtung der Zähne des Abtriebselements und der Mitnehmerfinger vorgesehen ist.

Abgesehen von dem damit einhergehenden relativ hohen Fertigungsaufwand ist das Problem der hohen Flächenpressung nicht gelöst, da die als Zylinderstifte ausgebildeten Mitnehmerfinger punktuell an den zugeordneten Flanken der Zähne des Abtriebselementes anliegen.

Ein gattungsbildender Stand der Technik ist des Weiteren aus der WO 2020/015 992 A2 sowie der EP 2 948 690 A2 bekannt.

Im Übrigen sind die Lastwechselanforderungen bei einer neueren Bremsengeneration deutlich derart erhöht, dass die bekannte Scheibenbremse diesen Anforderungen nicht im geforderten Maße gerecht wird.

Die bekannten gattungsgemäßen Scheibenbremsen können diese Bedingungen aufgrund der vorgenannten hohen punktuellen Flächenbelastung nicht erfüllen.

Der Erfindung liegt die Aufgabe zugrunde, eine Scheibenbremse der gattungsgemäßen Art so weiterzuentwickeln, dass ihre Standzeit, insbesondere die der Nachstelleinrichtung mit geringem fertigungstechnischem Aufwand verbessert wird.

Diese Aufgabe wird durch eine Scheibenbremse mit den Merkmalen des Anspruchs 1 gelöst.

Im Gegensatz zum Stand der Technik, bei dem, wie erwähnt, in Funktion des Nachstellers zwischen der zugeordneten Flanke des Zahnes des Abtriebselements und dem anliegenden Mitnehmerfinger eine Punktbelastung auftritt, wird durch die erfindungsgemäße Ausgestaltung des Mitnehmerfingers ein Linienkontakt zur Flanke des anliegenden Zahnes des Abtriebselementes erreicht, was zu einer Reduzierung der Flächenpressung führt, mit Verminderung des Verschleißes, d.h. einer Erhöhung der Standzeit.

Der verringerte Abrieb führt dazu, dass sich das Lüftspiel über die vorbestimmte Lebensdauer nicht oder nur minimal verändert und die festgelegten Grenzen nicht überschritten werden.

Bei Anordnung von zwei gleichgerichteten Mitnehmerfingern kann durch die erfindungsgemäße Ausgestaltung der Übergang zwischen den beiden Mitnehmerfingern optimiert werden, was zu einem gleichmäßigen Nachstellvorgang führt, wobei beide Mitnehmerfinger im Wesentlichen gleich ausgebildet sind.

Die Herstellung der neuen Nachstelleinrichtung erfolgt im Wesentlichen in gleicher Weise wie die der bekannten Nachstelleinrichtung, wobei die konvexe Kontur des Mitnehmerfingers bevorzugt lediglich in dem Bereich erfolgt, der für das Lüftspiel relevant ist. D.h., die Kinematik der Bremse bleibt unverändert.

Die Nachstelleinrichtung nach der Erfindung kann sowohl bei einer Axial-Scheibenbremse, wie auch bei einer Radial-Scheibenbremse vorgesehen sein.

Nach einem weiteren Gedanken der Erfindung ist der in Funktion an der Flanke des zugeordneten Zahnes anliegende Stützbereich auch quer zur Längserstreckung gewölbt, so dass sich eine lineare Anlage an der Flanke ergibt. Denkbar ist jedoch auch durch eine entsprechende Querschnittskontur eine flächige Anlage zu erreichen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: einen Teilausschnitt einer erfindungsgemäßen Scheibenbremse in einer perspektivischen Vorderansicht
- Figur 2: einen Teil einer Nachstelleinrichtung der Scheibenbremse in einer schaubildlichen Abbildung
- Figur 3: einen Teil der Nachstelleinrichtung in Funktionsstellung in einer Vorderansicht
- Figuren 4 und 5: jeweils einen Teil der Scheibenbremse nach der Erfindung, gleichfalls in perspektivischer Ansicht.

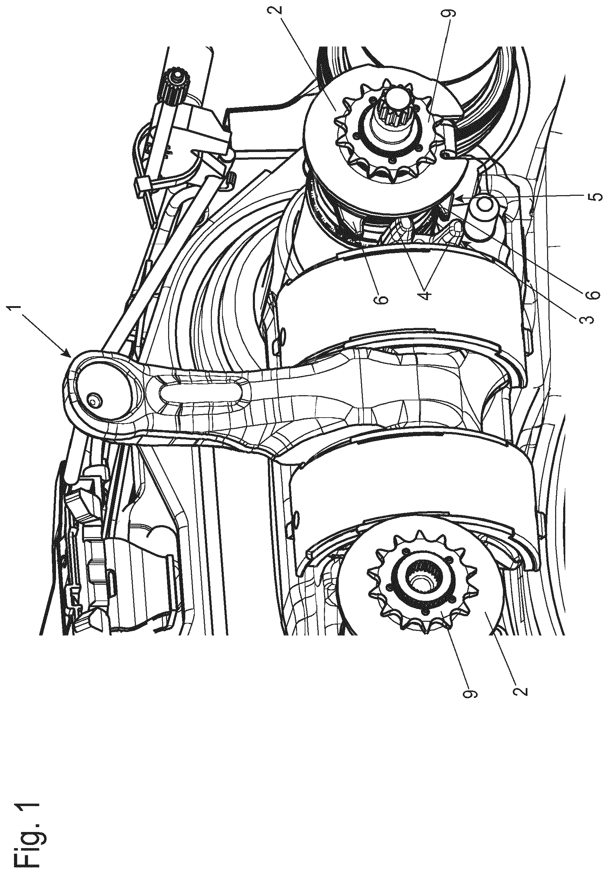

In der **Figur 1** ist ein Teil einer erfindungsgemäßen Scheibenbremse dargestellt, mit einem Bremshebel 1, der Bestandteil einer Zuspanneinrichtung einer Axial-Scheibenbremse ist, mit der ein nicht dargestellter Bremsbelag gegen eine Bremsscheibe des Nutzfahrzeuges pressbar ist.

Mittels des Bremshebels 1 sind zwei jeweils einen Bremsstempel bildende Stellspindeln 2 axial bewegbar, wobei sie bei Betätigung des Bremshebels 1 gegen den Bremsbelag gedrückt werden.

In einem die Zuspanneinrichtung aufnehmenden Bremssattel ist eine durch den Bremshebel 1 betätigbare Nachstelleinrichtung 3 angeordnet, mit der über eine axiale Verstellung der Stellspindel 2 eine verschleißbedingte Änderung eines Lüftspiels zwischen dem Bremsbelag und der Bremsscheibe im Wesentlichen ausgleichbar ist.

Im Beispiel sind zwei Stellspindeln 2 vorgesehen, die mittels einer Synchronisiereinrichtung verstellbar sind, wozu jede Stellspindel 2 Kettenräder 9 aufweist, die Bestandteil eines Kettentriebs sind.

Die Nachstelleinrichtung 3 weist zwei, an den Bremshebel 1 angeformte, sich in Schwenkrichtung des Bremshebels 1 erstreckende Mitnehmerfinger 4 auf, die in Zahnlücken zwischen Zähnen 6 einer ein Abtriebselement bildenden Schaltgabel 5 eingreifen, die verdrehfest an der zugeordneten Stellspindel 2 gehalten ist.

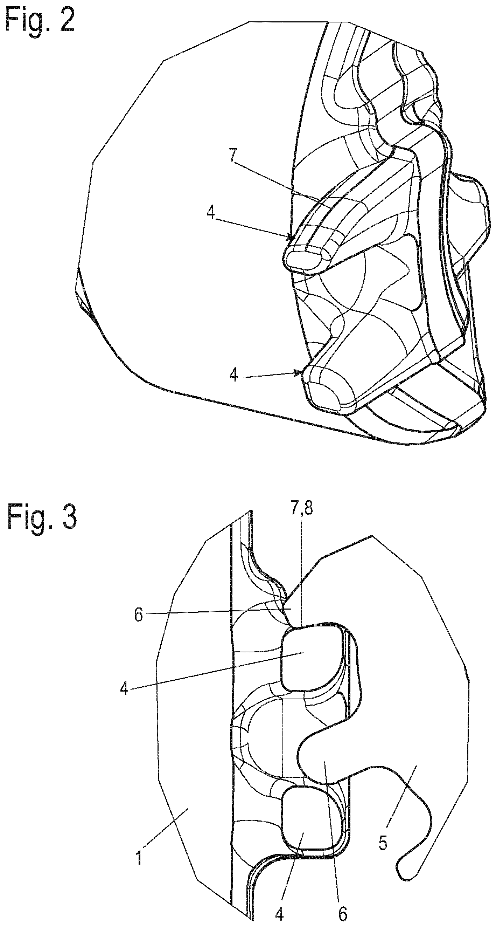

In der **Figur 2** sind die beiden Mitnehmerfinger 4 der Nachstelleinrichtung 3 zu erkennen, die gemäß der Erfindung einen in Längserstreckung konvex gewölbten Stützbereich 7 aufweisen, der in Funktion, wie in der **Figur 3** erkennbar, an der zugeordneten Flanke 8 eines Zahnes 6 der Schaltgabel 5 anliegt.

Es ist erkennbar, dass der Mitnehmerfinger 4 linear an der entsprechenden Flanke 8 der Schaltgabel 5 im Funktionsfall anliegt, wobei die Figur 3 genau diese Stellung des oberen Mitnehmerfingers 4 wiedergibt, bei der die Schaltgabel 5 unter Mitnahme der Stellspindel 2 im Uhrzeigersinn verdreht wird.

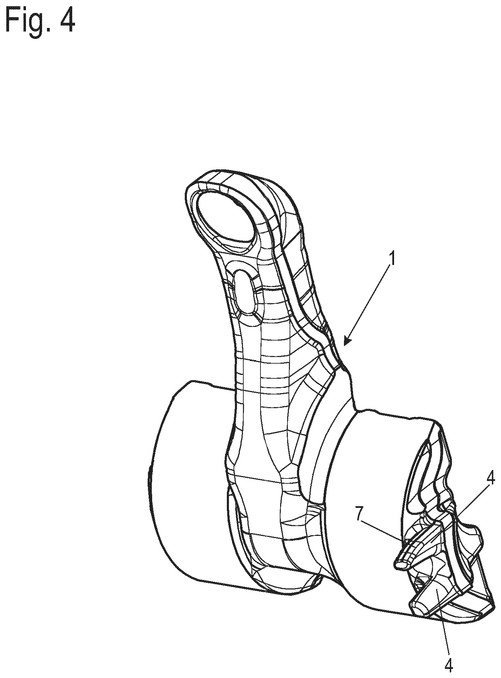

In der **Figur 4** ist der Bremshebel 1 mit angeschlossenen Mitnehmerfingern 4 als Einzelheit dargestellt. Dabei ist dieser Bremshebel 1 so konzipiert, dass er für eine Axial-Scheibenbremse Verwendung findet, entsprechend der Abbildung in Figur 1.

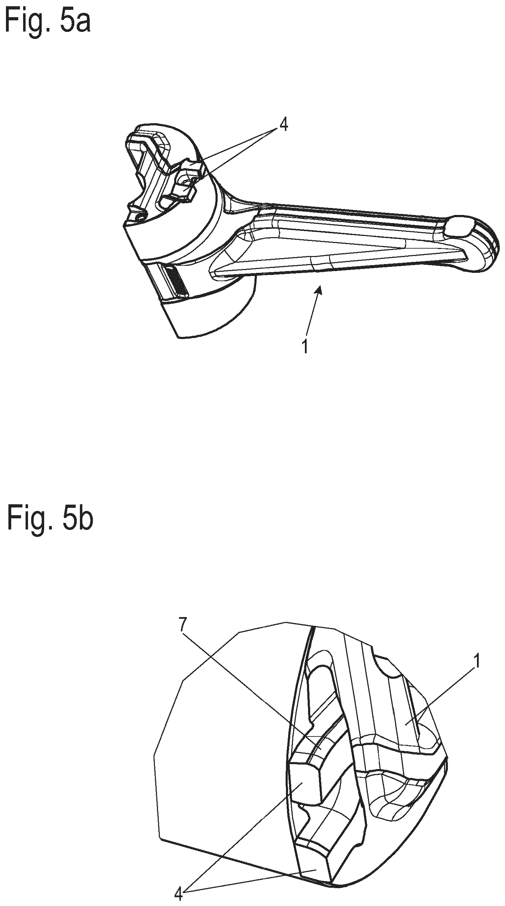

Die **Figur 5** zeigt einen Bremshebel 1 für eine Radial-Scheibenbremse, an der ebenfalls an einer Seite zwei Mitnehmerfinger 4 angeordnet sind. In der Figur 5a) ist der Bremshebel 1 als Ganzes, üblicherweise als Gussteil ausgebildet dargestellt, während die Figur 5b) einen vergrößerten Ausschnitt des Bremshebels 1 wiedergibt im Bereich der Mitnehmerfinger 4.

### Bezugszeichenliste

- 1: Bremshebel
- 2: Stellspindel
- 3: Nachstelleinrichtung
- 4: Mitnehmerfinger
- 5: Schaltgabel
- 6: Zahn
- 7: Stützbereich
- 8: Flanke
- 9: Kettenrad

## Patentansprüche

1. Scheibenbremse für ein Nutzfahrzeug, mit
a) einem eine Bremsscheibe übergreifenden Bremssattel,
b) einer im Bremssattel angeordneten, einen Bremshebel (1) aufweisenden Zuspanneinrichtung
c) mindestens einer Stellspindel (2), die mittels der Zuspanneinrichtung axial bewegbar ist,
d) einer im Bremssattel positionierten, durch den Bremshebel (1) betätigbaren Nachstelleinrichtung (3), mit der über eine axiale Verstellung der Stellspindel (2) eine verschleißbedingte Änderung eines Lüftspiels zwischen dem Bremsbelag und der Bremsscheibe im Wesentlichen ausgleichbar ist,
e) wobei die Nachstelleinrichtung (3) mindestens einen am Bremshebel (1) angeordneten, sich in dessen Schwenkrichtung erstreckenden Mitnehmerfinger (4) aufweist, der zur Nachstellung mit einem mit der Stellspindel (2) in Wirkverbindung stehenden, gezahnten Antriebselement korrespondiert,
**dadurch gekennzeichnet, dass**
der Mitnehmerfinger (4) einen in Längserstreckung konvex gewölbten Stützbereich (7) aufweist, der in Funktion an der zugeordneten Flanke (8) eines Zahnes (6) des Antriebselementes (5) anliegt.

2. Scheibenbremse nach Anspruch 1,
**dadurch gekennzeichnet, dass**
bei Anordnung mehrerer Mitnehmerfinger (4) jeder Mitnehmerfinger (4) einen konvex gewölbten Stützbereich (7) aufweist.

3. Scheibenbremse nach Anspruch 1 oder 2,
**dadurch gekennzeichnet, dass**
der konvexe Stützbereich (7) im Querschnitt gewölbt konturiert ist.

4. Scheibenbremse nach einem der vorstehenden Ansprüche,
**dadurch gekennzeichnet, dass** sich der konvexe Stützbereich (7) über die gesamte Länge des Mitnehmerfingers (4) erstreckt.

5. Scheibenbremse nach einem der vorstehenden Ansprüche,
**dadurch gekennzeichnet, dass**
der konvexe Stützbereich (7) lediglich über den Anlagebereich mit der Flanke (8) des Zahnes (6) erstreckt.

6. Scheibenbremse nach einem der vorstehenden Ansprüche,
**dadurch gekennzeichnet, dass**
der konvexe Stützbereich (7) linear an der Flanke (8) des Zahnes (6) anliegt.

7. Scheibenbremse nach einem der vorstehenden Ansprüche,
**dadurch gekennzeichnet, dass**
der konvexe Stützbereich (7) flächig an der Flanke (8) des Zahnes (6) anliegt.

## Claims

1. Disc brake for a utility vehicle, having
a) a brake caliper engaging over a brake disc,
b) an actuating device arranged in the brake caliper and having a brake lever (1)
c) at least one adjusting spindle (2), which can be moved axially by means of the actuating device,
d) an adjusting device (3), which is positioned in the brake caliper and can be actuated by the brake lever (1), by means of which a wear-induced change in a running clearance between the brake lining and the brake disc can essentially be offset by an axial adjustment of the adjusting spindle (2),
e) wherein the adjusting device (3) has at least one driver finger (4), which is arranged on the brake lever (1) and extends in the pivoting direction thereof and which corresponds to a toothed drive element, which is operatively connected to the adjusting spindle (2) for adjustment,
**characterized in that**
the driver finger (4) has a support region (7) that is convexly curved in a longitudinal direction, which, in operation, lies against the associated flank (8) of a tooth (6) of the drive element (5).

2. Disc brake according to claim 1,
**characterized in that**
when a plurality of driver fingers (4) are arranged, each driver finger (4) has a convexly curved support region (7).

3. Disc brake according to claim 1 or 2,
**characterized in that**
the convex support region (7) has a curved contour in cross section.

4. Disc brake according to any one of the preceding claims,
**characterized in that** the convex support region (7) extends over the entire length of the driver finger (4).

5. Disc brake according to any one of the preceding claims,
**characterized in that**
the convex support region (7) only extends over the contact area with the flank (8) of the tooth (6).

6. Disc brake according to any one of the preceding claims,
**characterized in that**
the convex support region (7) lies linearly against the flank (8) of the tooth (6).

7. Disc brake according to any one of the preceding claims,
**characterized in that**
the convex support region (7) lies flat against the flank (8) of the tooth (6).

## Revendications

1. Frein à disque pour un véhicule utilitaire avec
a) un étrier de frein chevauchant un disque de frein,
b) un équipement de serrage disposé dans l'étrier de frein et présentant un levier de frein (1)
c) au moins une broche de réglage (2) qui est mobile axialement au moyen de l'équipement de serrage,
d) un équipement d'ajustage (3) positionné dans l'étrier de frein et actionnable par le biais du levier de frein (1) avec lequel une modification soumise à l'usure d'un jeu entre la garniture de frein et le disque de frein peut être sensiblement compensée via un déplacement axial de la broche de réglage (2),
e) dans lequel l'équipement d'ajustage (3) présente au moins un doigt d'entraînement (4) disposé au niveau du levier de frein (1) et s'étendant dans la direction de pivotement de celui-ci, qui correspond à un élément d'entraînement denté en liaison active avec la broche de réglage (2) pour le réglage et
**caractérisé en ce que**
le doigt d'entraînement (4) présente une zone d'appui (7) bombée de manière convexe dans la direction longitudinale qui, en fonctionnement, s'appuie au niveau du flanc (8) associé d'une dent (6) de l'élément d'entraînement (5).

2. Frein à disque selon la revendication 1,
**caractérisé en ce que**
lors de l'agencement de plusieurs doigts d'entraînement (4), chaque doigt d'entraînement (4) présente une zone d'appui (7) courbée de manière convexe.

3. Frein à disque selon la revendication 1 ou 2,
**caractérisé en ce que**
la zone d'appui convexe (7) est profilée de manière bombée en section transversale.

4. Frein à disque selon l'une quelconque des revendications précédentes,
**caractérisé en ce que** la zone d'appui convexe (7) s'étend sur toute la longueur du doigt d'entraînement (4).

5. Frein à disque selon l'une quelconque des revendications précédentes,
**caractérisé en ce que**
la zone d'appui convexe (7) s'étend seulement sur la zone d'installation avec le flanc (8) de la dent (6).

6. Frein à disque selon l'une quelconque des revendications précédentes,
**caractérisé en ce que**
la zone d'appui convexe (7) repose de manière linéaire au niveau du flanc (8) de la dent (6).

7. Frein à disque selon l'une quelconque des revendications précédentes,
**caractérisé en ce que**
la zone d'appui convexe (7) repose à plat au niveau du flanc (8) de la dent (6).
